# EUROPEAN PATENT APPLICATION

(11) **EP 2 019 031 A1**
(43) Date of publication of application: **28.01.2009**
(21) Application number: 07014510.7
(22) Date of filing: 24.07.2007
(51) Int. Cl.: B62K 21/16

(54) **Combined structure of a tubular handle**

(71) Applicant: Yicheng Sports Co., Ltd., Changhua 523 (TW)
(72) Inventor: Yen, Yu-Chuan, Changhua 523 (TW)
(74) Representative: Reinhardt, Harry

(57) **Abstract**

The present invention relates to a combined structure of a tubular handle, which is composed of several sections of symmetrically deployed sleeve (2), elbow (3) and holding tube (5); hence, every section of the tube can be optionally collocated with different lengths, angles, materials and colors; in addition, the tube body of said handle will be fortified to become studier and will reach the practical effect on avoiding the handle being deformed and fractured.

## Description

### BACKGROUND OF THE INVENTION

### FIELD OF THE INVENTION

The present invention relates to a combined structure of a tubular handle, which is assembled by several optional sections of tubes and sleeves; in addition, the tube body of said handle will be fortified to become studier to reach the practical effect on avoiding the handle being deformed and fractured.

### DESCRIPTION OF THE RELATED ART

At present, the handle applied on bicycle or motorcycle has a fixed form which has fixed size, fixed angle of the arc and fixed material. However, producing the handle via said conventional manufacturing model will cause the volume of the handle to occupy relatively bigger space because that the handle is not level and straight but arc-shaped, and wasted space caused by arc-shaped handle will increase transportation cost. In addition, the cost of equipment for producing one-body handle is high and maintenance cost and other necessary operation fund will also cause heavy burden to the manufacturer.

### SUMMARY OF THE INVENTION

The first purpose of the present invention is to provide the combined structure of the tubular handle, which is composed of several sections of symmetrically deployed sleeve for combining elbow and holding tube; in addition, the handle will be fortified by said combined structure to avoid being deformed and fractured.

The second purpose of the present invention is to provide the combined structure of the tubular handle, wherein every section of the tube body can be optionally applied and symmetrically deployed with different lengths.

The third purpose of the present invention is to provide the combined structure of the tubular handle, wherein every section of the tube body can be optionally applied and symmetrically deployed with different angles.

The fourth purpose of the present invention is to provide the combined structure of the tubular handle, wherein every section of the tube body can be optionally applied and symmetrically deployed with different materials.

The fifth purpose of the present invention is to provide the combined structure of the tubular handle, wherein every section of the tube body can be optionally applied and symmetrically deployed with different colors.

The sixth purpose of the present invention is to provide the combined structure of the tubular handle, wherein the surface of every section of the tube body can be optionally applied and asymmetrically deployed with different colors to improve the pleasantness of vision.

The seventh purpose of the present invention is to provide the combined structure of the tubular handle, wherein the handle tube is applied on bicycle.

The eighth purpose of the present invention is to provide the combined structure of the tubular handle, wherein the handle tube is applied on the motorcycle.

### BRIEF DESCRIPTION OF THE DRAWINGS

Other features and advantages of the present invention will become apparent in the following detailed description of the preferred embodiments, with reference to the accompanying drawings, in which:
Fig. 1 is a 3-D exploded view of the present invention.
Fig.2-A is a 3-D view of the assembled present invention.
Fig.2-B is a cross-sectional view of the assembled present invention.
Fig.3 is a schematic view of the present invention preferred embodiment assembled on bicycle.
Fig.4-A is schematic view (1) of the invention at different forms.
Fig.4-B is schematic view of the invention assembled on motorcycle.
Fig.5 is schematic view (2) of the invention at different forms.
Fig.6-A is a 3-D view of the invention at the other form.
Fig.6-B is a cross-sectional view of the invention at the other form.

### DETAILED DESCRIPTION OF THE PREFERRED EMBODIMENTS

In the detailed description of the preferred embodiments, it should be noted that like elements are indicated by the same reference numerals throughout the disclosure.

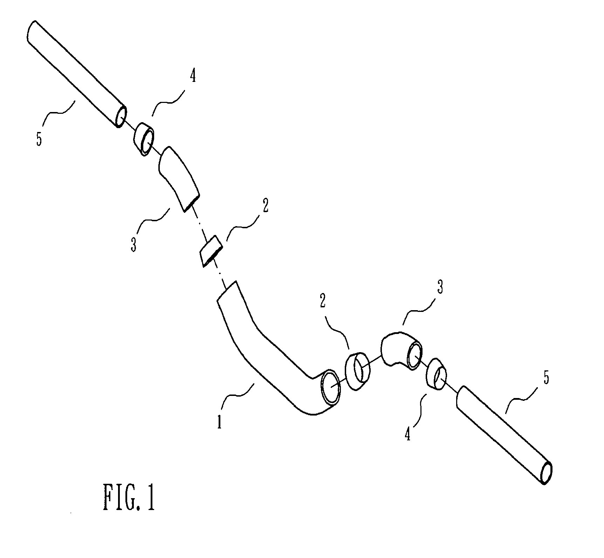

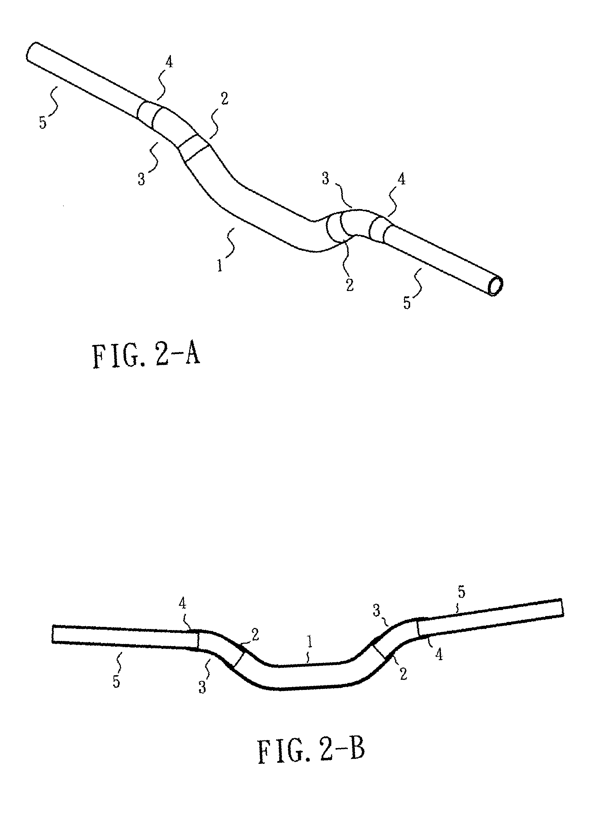

Firstly, please refer to Fig. 1 and Fig. 2-A and 2-B; the present invention is related to the combined structure of the tubular handle, which is composed of one middle tube 1 and several sections of symmetrically deployed sleeve 2, elbow 3, sleeve 4 and holding tube 5 and said components are assembled in proper order; the said tube body is sectional and then combined to one unit; hence, the handle can be disassembled before transportation and the volume of the handle for transportation will be compacted and the transportation cost will be saved; in addition, the manufacture equipment will be simplified and the manufacturing cost will be saved, too.

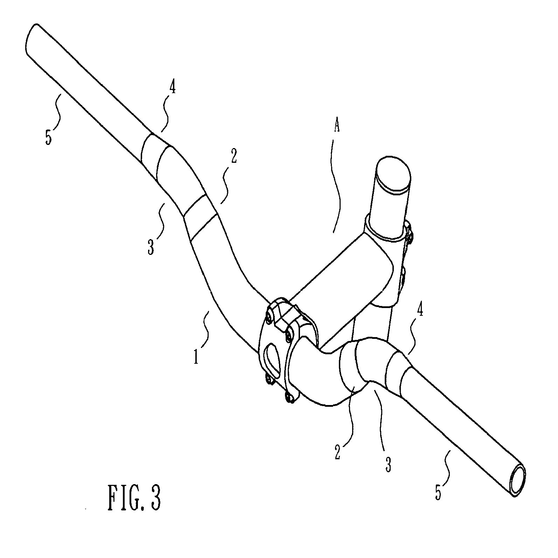

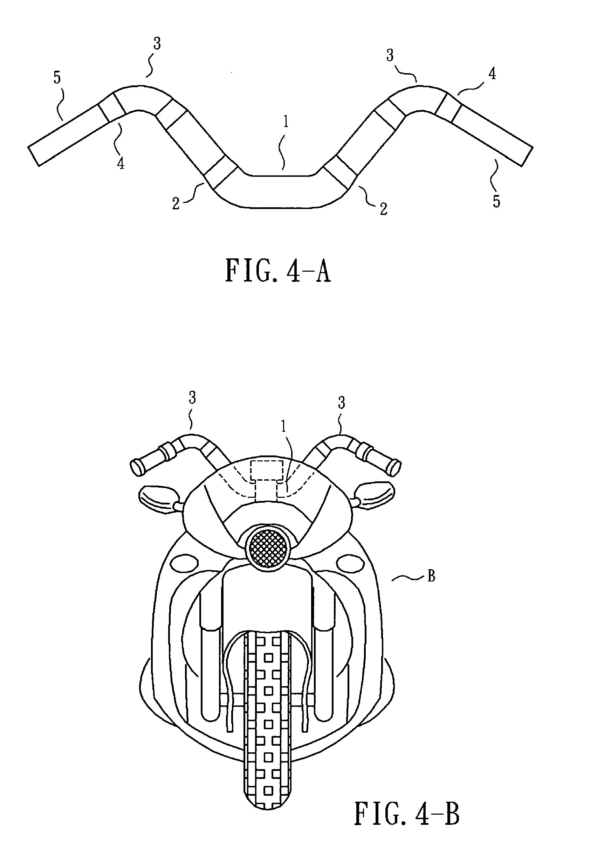

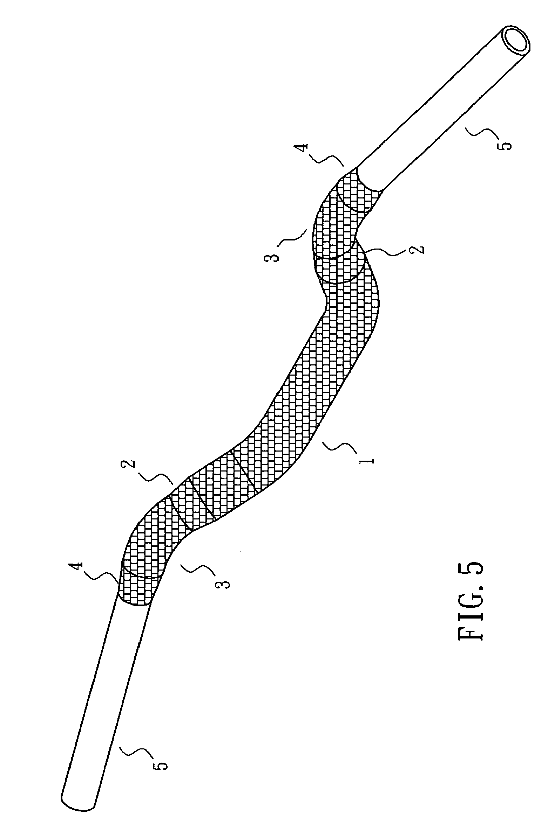

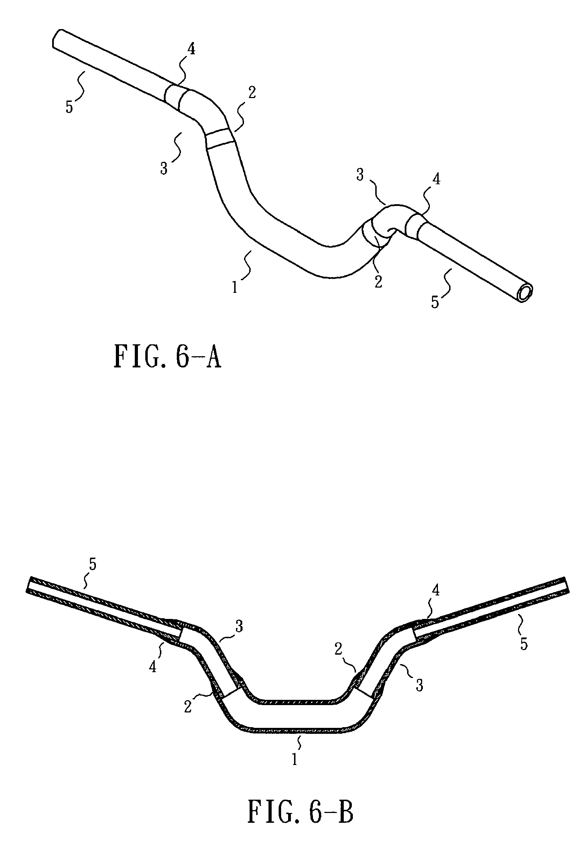

Hence, the handle tube, after being combined as one unit, can be applied on bicycle A (shown as fig. 3) or applied on motorcycle B (shown as fig. 4-A and 4-B) after changing the length and the angle of every section of elbow 3 and holding tube 5. Meanwhile, after every section of middle tube 1, elbow 3 and holding tube being varied in diversified lengths and angles, various materials and forms of the handle can be optionally collocated (shown as fig.5, 6-A and 6-B) to fortify said handle tube body to be studier for reaching the practical effect on avoiding the handle being deformed and fractured. Furthermore, since every tube is a sectional unit, the designer can have more diversified arrangement for the material, the thickness and the appearance of the tube on the arc section to fortify the safety of the handle; in addition, the trouble that the conventional handle is made of single material because of being unitized will be shaken off.

Moreover, the surface of every tube section can be arranged as symmetrical or asymmetrical colors to reach the vision effect on blazing with color and glorifying. While the description of present invention is made in connection with what is considered the most practical and preferred embodiments, it is understood that this invention is not limited to the disclosed embodiments but intended to cover various arrangements included within the spirit and scope of the broadest interpretations and equivalent arrangements.

## Claims

1. A combined structure of a tubular handle especially for use on a bicycle or motorcycle, the tubular handle being composed of one middle tube (1) and several sections of symmetrically deployed sleeve (2, 4), elbow (3) and holding tube (5), wherein said components are assembled in proper order; the tube body is sectional and then combined to one unit.

2. A combined structure of the tubular handle as claimed in claim 1, wherein said every section of the tube body can be optionally applied and symmetrically deployed with different lengths.

3. A combined structure of the tubular handle as claimed in claim 1, wherein said every section of the tube body can be optionally applied and symmetrically deployed with different angles.

4. A combined structure of the tubular handle as claimed in claim 1, wherein said every section of the tube body can be optionally applied and symmetrically deployed with different materials.

5. A combined structure of the tubular handle as claimed in claim 1, wherein said every section of the tube body can be optionally applied and symmetrically deployed with different colors.

6. A combined structure of the tubular handle as claimed in claim 1, wherein said surface of every section of the tube body can be optionally applied and asymmetrically deployed with different colors to improve the pleasantness of vision.

7. A combined structure of the tubular handle as claimed in claim 1, wherein said handle tube is applied on bicycle.

8. A combined structure of the tubular handle as claimed in claim 1, wherein said handle tube is applied on motorcycle.
